# EUROPEAN PATENT SPECIFICATION

(11) **EP 2 150 997 B1**
(45) Date of publication and mention of the grant of the patent: **12.02.2014**
(21) Application number: 07846174.6
(22) Date of filing: 27.12.2007
(51) Int. Cl.: H01M 2/20, H01M 2/02, H01M 2/08, H01M 2/06

(54) **BATTERY PACK**
BATTERIEPACK
ENSEMBLE BATTERIE

(30) Priority: 29.05.2007 CN 200710103771
(43) Date of publication of application: 10.02.2010
(73) Proprietor: Byd Company Limited, Shenzhen, Guangdong 518119 (CN)
(72) Inventor: WANG, Chuanfu, Guangdong 518119 (CN); SHEN, Xi, Guangdong 518119 (CN); ZHU, Jianhua, Guangdong 518119 (CN); ZHENG, Weixin, Guangdong 518119 (CN)
(74) Representative: HOFFMANN EITLE
(86) International application number: PCT/CN2007/071348
(87) International publication number: WO 2008/144994

(56) References cited:
- WO-A1-2004/045006
- CN-A- 1 319 901
- JP-A- 11 312 512
- JP-A- 2004 253 262
- JP-A- 2005 190 885
- JP-A- 2005 251 617
- JP-A- 2007 109 548
- US-A- 3 607 401
- US-A1- 2004 018 425
- US-A1- 2005 238 930
- US-A1- 2006 115 727

## Description

### TECHNICAL FIELD

This invention relates to a battery pack.

### BACKGROUND

With the popularization of environmental consciousness, the electric vehicle or hybrid vehicle shall substitute the existing fuel-combustion vehicle in future. As the core power source of electric vehicle, the power battery pack is especially important, which may be formed by a plurality of cells connected in series or in parallel.

CN 1767245 A discloses a battery module. As shown in Fig. 1, the module comprises a plurality of unit cells 1 arranged in a housing, a connecting member 20 and a fixing member 21. Each unit cell 1 includes a positive terminal 2 and a negative terminal 3 protruded out. The connecting member 20 couples the positive terminal 2 and the negative terminal 3 of one unit cell 1 to the negative terminal 3 and the positive terminal 2 of the adjacent unit cell 1 respectively, that is, the battery module is formed by connecting the unit cells in series. Male threads are formed on the positive terminal 2 and the negative terminal 3, and female threads are formed in the fixing member 21, so that the connecting member 40 is fixed to the positive terminal 2 and the negative terminal 3 by tightening the fixing member 21.

In the battery module as mentioned above, the positive terminal and the negative terminal are connected threadly and fixed by the fixing member, thus its contact resistance is high; if the thread connection looses, the contact resistance will be higher. Thus, the internal resistance of this battery module is very high; moreover, because each unit cell requires the positive and negative terminals with male threads as the conducting element, and the connecting member and the fixing member for connecting multiple unit cells in series, thus, the weight and volume of the battery module are increased.

JP 2005/190885 A is prior art falling under the preamble of claim 1. CN 1 319 901 A, JP11-312512 A, JP 2005/251517 A, JP 2004/253262 A, US 2005/238930 A1, US 3607401 A, WO 2004/045006 A1, US 2006/115727 A1, US 2004/018425, and JP 2007/109548 are further prior art.

### SUMMARY OF THE INVENTION

This invention aims to provide a battery pack which has a low internal resistance.

This invention provides a battery packas defined in claim 1.

For the battery pack in this invention, the electrode terminals of the unit cell, i.e., the positive terminal and the negative terminal are formed in a sheet shape, so that multiple unit cells can be connected electrically together through binding the sheet shape electrode terminals of adjacent two unit cells, with almost no contact resistance between unit cells, and the electrode terminals bound together will not loose. Thus, as compared with the prior battery pack in which the unit cells are screwed together, the battery pack in the present invention has low internal resistance, light weight, and reliable connection.

Moreover, the battery pack adopts the sheet as the electrode terminal which can be directly bound together, so it is not necessary to use additional connecting members and, as a result, the weight and volume of the battery pack may be greatly reduced.

### BRIEF DESCRIPTION OF THE DRAWINGS

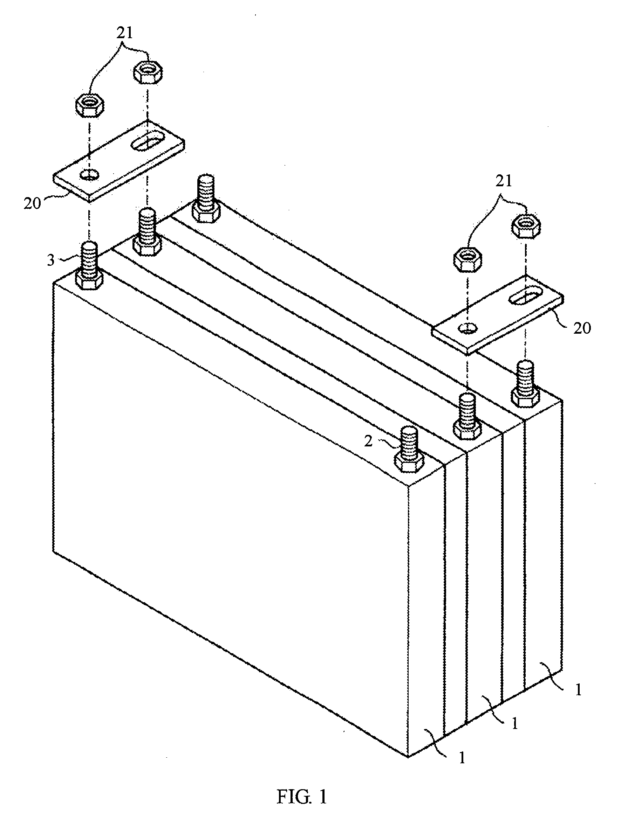

Fig. 1 is a schematic view of a conventional battery pack;
Fig. 2 is a schematic view of the present battery pack;
Fig. 3 is a side sectional view of the present battery pack;
Fig. 4 is a sectional view of a unit cell in the present battery pack;
Fig. 5 and Fig. 6 are the schematic views of sealing member that seals the cover plate and the electrode terminal of the unit cell in the present battery pack.

### DETAILED DESCRIPTION OF CERTAIN INVENTIVE EMBODIMENTS

Hereinafter, the present invention will be described in detail with reference to the drawings.

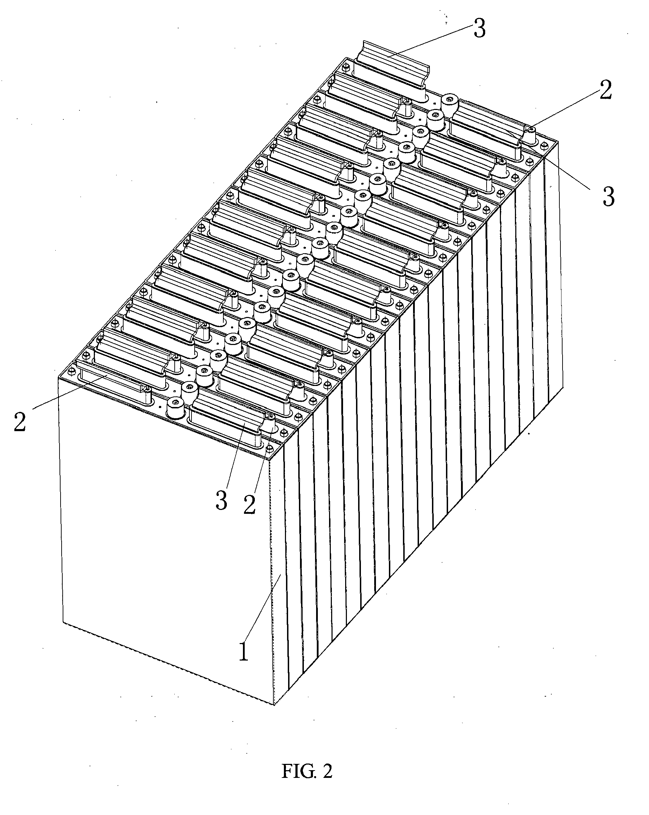

As shown in Figs. 2, 3 and 4, the present invention provides a battery pack, which comprises a plurality of unit cells 1 each of which has two electrode terminals 2 and 3, and which are connected in series or in parallel by connecting an electrode terminal 2 or 3 of a unit cell 1 to an electrode terminal 3 or 2 of an adjacent unit cell 1, characterized in that, the electrode terminals 2 and 3 each is formed in a sheet shape, and the connection between the electrode terminals 2 and 3 is the binding of two sheets.

In the present invention, the unit cell may be any suitable type in the prior art, such as the prismatic cell or cylindrical cell. Multiple unit cells may be connected in series or in parallel to form the battery pack.

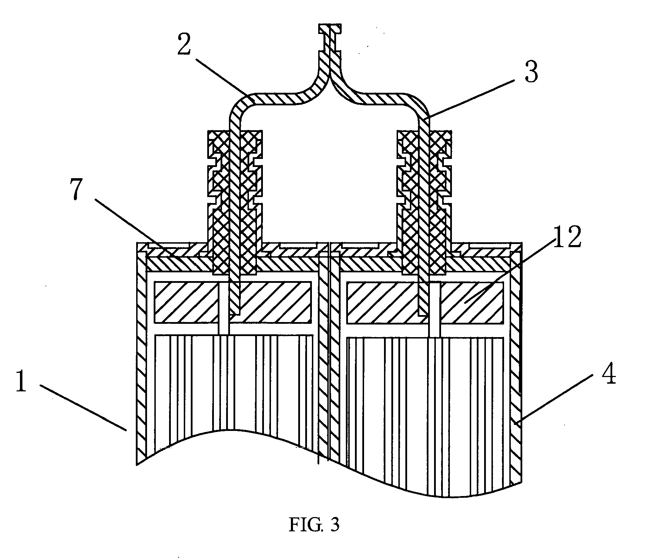

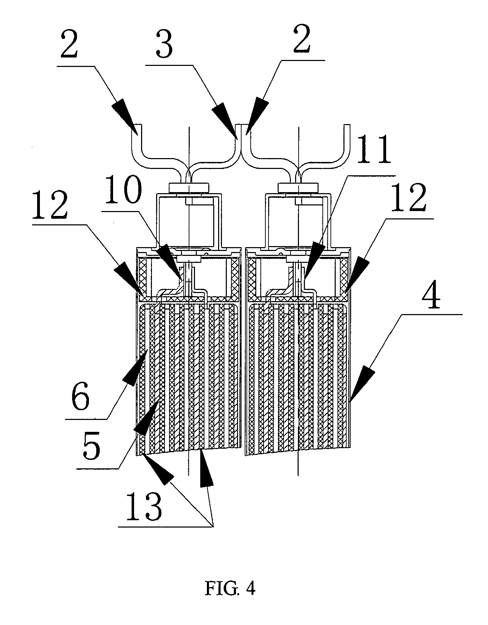

As shown in Fig. 3 and Fig. 4, each unit cell usually comprises a case 4 and electrode assembly housed in the case 4. The electrode assembly usually comprises a positive plate 5, a negative plate 6 and a separator 13 that is interposed therebetween. The case 4 usually at one end includes a cover plate 7 having a through hole formed therethrough, and the electrode terminals (including the positive terminal 2 and the negative terminal 3) may be protruded out through the through hole so as to output the current of the cell. Moreover, the gap between the electrode terminal and the through hole is usually sealed by a sealing member to avoid the leakage of electrolyte from the case 4 of the cell.

Within the unit cell, the positive and negative terminals may be directly connected with the positive and negative plates, for example, the positive terminal may be welded with the positive plate, and the negative terminal may be welded with the negative plate. Preferably, the positive plate 5 has a positive tab 10 which is connected with the positive terminal 2; the negative plate 6 has a negative tab 11 which is connected with the negative terminal 3.

The positive and negative tabs may be made of various conductive materials, which may be preferably one or more of copper, nickel and aluminum. Preferably, the electrode terminal is connected with the electrode tab and the electrode tab is connected with the electrode plate by means of welding, such as ultrasonic welding, cold pressure welding, laser welding, brazing, flash butt welding, friction welding, and electric resistance welding.

The welding position between the negative tab 11 and the negative terminal 3, as well as between the positive tab 10 and the positive terminal 2 may be provided with an insulating ring 12 respectively. The insulating ring 12 is formed as two segments, during assembly, the insulating ring may be enclosed around the welding position for insulating and shock absorbing to improve the safety of the cell. The insulating ring may be made of various insulation materials such as plastics and rubbers.

After multiple unit cells are connected together to form the battery pack, the battery pack may be fixed by means of various methods in the prior art, such as arrangement of heat-sinking structure between adjacent unit cells, and fasten the connected unit cells together to avoid the displacement of the unit cells.

In the present invention, in order to install the sheet shape electrode terminal and assemble the battery pack easily, the unit cell is preferably the prismatic cell. The width of the sheet shape electrode terminal may be 5-40% of the width of the unit cell, 10-25% is preferred; the thickness of the sheet shape electrode terminal may be 1-20% of the unit cell thickness, 3-15% is preferred.

As shown in Fig. 2, the unit cell 1 is connected in series to form the battery pack, that is, an electrode terminal of a unit cell is connected with an electrode terminal having reverse polarity of an adjacent unit cell. In order to output the current of the battery pack, in the two unit cells at both ends of the battery pack, one electrode terminal of one unit cell and one electrode terminal having reverse polarity of another unit cell may be used for connecting the external electrical equipment. In particularly, the negative terminal 3 of the unit cell at one end of the battery pack is connected with the positive terminal 2 of its adjacent unit cell, and the positive terminal 2 thereof is used for connecting with external electrical equipment. The positive terminal 2 of the unit cell at another end of the battery pack is connected with the negative terminal 3 of its adjacent unit cell, the negative terminal 3 thereof is used for connecting with external electrical equipment. Among other adjacent two unit cells, the positive terminal 2 is connected with the negative terminal 3, so as to form a battery pack in series. Multiple unit cells may be also formed a battery pack in parallel as in the prior art, and its detailed description is omitted here.

In the present invention, the electrode terminal is formed in a sheet shape, and the electrode terminals are connected through the binding of the sheets. The binding of the sheets may be further fixed by means of various manners, such as welding, gluing or a clamp, or any combinations thereof, for example, a clamp may further used after the welding or gluing. In a preferred embodiment as shown in Fig. 2, the ends of two sheet shape electrode terminals connected with each other may be bent towards each other and bound together, which can simplify the fix and connection of two electrode terminals.

In the present invention, two sheet shape electrode terminals are preferably fixed by welding, such as the cold pressure welding, ultrasonic welding, laser welding, brazing, flash butt welding, friction welding, and electric resistance welding, wherein the cold pressure welding is preferred. For cold pressure welding, only the adequate static pressure may realize the reliable weld, and during the weld process, the heat emission is low, no vibration and no relative displacement will be occurred.

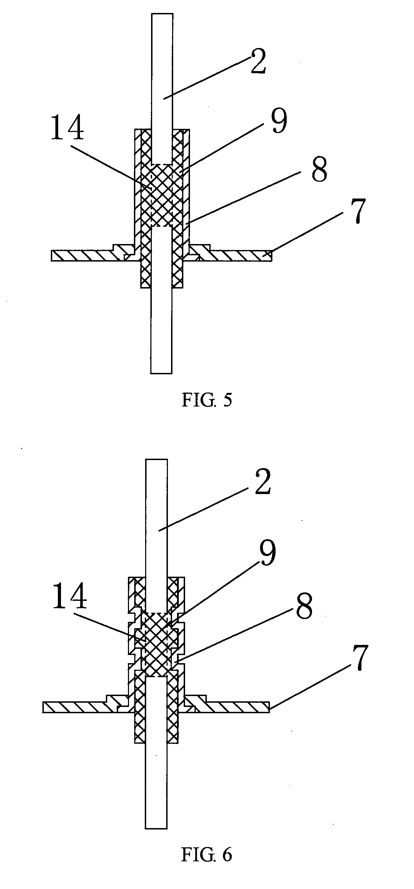

In an embodiment as shown in Fig. 5 and Fig. 6, the sealing member between the cover plate and the electrode terminal may comprises an insulating elastic component 9 held at the outside of the sheet shape electrode terminal, and a rivet 8 clamped on the insulating elastic component 9. The insulating elastic component 9 may be an elastic insulating material such as plastics and rubber. Fig. 5 illustrates the status of the rivet before clamped, and Fig. 6 illustrates the status of the rivet after clamped. As shown in Fig. 6, after the rivet 8 is clamped, the insulating elastic component 9 has elastic deformation, so as to tightly contact with the electrode terminal and the inner wall of the rivet, so that the electrode terminal is sealed. With this sealing member, the cover plate and electrode terminal may be tightly sealed to effectively prevent the intrusion of impurities such as moisture etc.

The rivet 8, the insulating elastic component 9 and the electrode terminal may be integrated by injection molding. That is, the rivet 8, the insulating elastic component 9 and the electrode terminal may be integrated together through injection molding, and then match the integral structure with the through hole on the cover plate. And then, as shown in Fig. 6, the rivet is tightly clamped to seal the electrode terminal. In this preferred embodiment, the sealing can be realized easily and reliably.

In addition, in a preferred embodiment as indicated by the broken line in Fig. 5 and Fig. 6, on the sheet shape electrode terminal, the places clamped by the insulating elastic component 9 may form one or more through holes 14. Thus, during the injection molding, the insulating elastic component 9 may be integrated more closely and tightly with the sheet shape electrode terminal through the through hole 14, thus reinforces its strength and ensures its structural stability.

As it may be seen from the above description, in the battery pack according to the present invention, the electrode terminal of the unit cell, i.e., the positive terminal and the negative terminal are formed in a sheet shape, through binding of the sheet shape electrode terminals of adjacent two unit cells, the electrical connection of multiple unit cells can be realized, and almost no contact resistance will be occurred between the unit cells, moreover, after welding, no loose problems of electrode terminals will be occur. Thus, as compared with the prior battery pack with screwed unit cells, the battery pack in the present invention has lower internal resistance.

Moreover, the present battery pack adopts the sheet shape electrode terminal which can be directly welded, no additional connecting member is necessary, thus, the weight and volume of the battery pack may be greatly reduced.

## Claims

1. A battery pack, comprising a plurality of unit cells (1) each of which has two electrode terminals (2 and 3), and which are connected in series or in parallel by connecting an electrode terminal (2 or 3) of a unit cell (1) to an electrode terminal (3 or 2) of an adjacent unit cell (1), wherein
the electrode terminals (2 and 3) each is formed in a sheet shape, the electrode terminals (2 and 3) are bent so as to form two opposing faces, and the connection between the electrode terminals (2 and 3) is the binding of the two opposing faces;
**characterized in that** the unit cell is a prismatic cell having a case (4) and electrode assembly housed in the case, wherein the case at one end includes a cover plate (7) having a through hole, the sheet shape electrode terminal is protruded out through the through hole, and the gap between the cover plate (7) and the sheet shape electrode terminal is sealed by a sealing member,
wherein the sealing member comprises an insulating elastic component (9) clamped at the outer side of the sheet shape electrode terminal, and a rivet (8) held on the insulating elastic component (9).

2. The battery pack as claimed in claim 1, wherein the sheet shape electrode terminals connected to each other have ends which are bending towards each other and bound together.

3. The battery pack as claimed in claim 2, wherein the ends of the sheet shape electrode terminals bound together is fixed by welding and/or gluing and/or a clamp.

4. The battery pack as claimed in any one of claim 1-3, wherein the sheet shape electrode terminal has the width being 5-40% of that of the unit cell, and the thickness being 1-20% of that of the unit cell.

5. The battery pack as claimed in one of the preceding claims, wherein the rivet (8), the insulating elastic component (9) and the sheet shape electrode terminal are integrated by injection molding.

6. The battery pack as claimed in claim 5, wherein the sheet shape electrode terminal has a through hole (14) at the part clamped by the insulating elastic component (9).

## Patentansprüche

1. Batteriesatz mit einer Vielzahl von Einheitszellen (1), von denen jede zwei Elektrodenanschlüsse (2 und 3) aufweist und die durch Verbinden eines Elektrodenanschlusses (2 oder 3) einer Einheitszelle (1) mit einem Elektrodenanschluss (3 oder 2) einer benachbarten Einheitszelle (1) in Reihe oder parallel verbunden sind, wobei
die Elektrodenanschlüsse (2 und 3) jeweils plattenförmig ausgebildet sind, die Elektrodenanschlüsse (2 und 3) gebogen sind, um zwei sich gegenüberliegende Seiten auszubilden und die Verbindung zwischen den Elektrodenanschlüssen (2 und 3) die Verbindung der zwei sich gegenüberliegenden Seiten ist;
**dadurch gekennzeichnet, dass** die Einheitszelle eine prismatische Zelle ist, die ein Gehäuse (4) aufweist und ein in dem Gehäuse aufgenommenen Elektrodenaufbau, wobei das Gehäuse bei einem Ende eine Abdeckplatte (7) mit einem Durchgangsloch aufweist, der plattenförmige Elektrodenanschluss durch das Durchgangsloch hervorsteht und der Spalt zwischen der Abdeckplatte (7) und dem plattenförmigen Elektrodenanschluss durch ein Dichtelement abgedichtet ist,
wobei das Dichtelement eine isolierende elastische Komponente (9) aufweist, die bei der äußeren Seite des plattenförmigen Elektrodenanschlusses eingeklemmt ist und eine Niete (8) auf der isolierenden elastischen Komponente (9) gehalten wird.

2. Batteriesatz nach Anspruch 1, bei dem die miteinander verbundenen plattenförmigen Elektrodenanschlüsse Enden aufweisen, die aufeinander zu gebogen und zusammengebunden sind.

3. Batteriesatz nach Anspruch 2, bei dem die Enden der zusammengebunden plattenförmigen Elektrodenanschlüsse durch Schweißen und/oder Kleben und/oder einer Klammer befestigt sind.

4. Batteriesatz nach Angaben der Ansprüche 1 bis 3, bei dem der plattenförmige Elektrodenanschluss eine Breite aufweist, die 5-40 % von der der Einheitszelle aufweist und die Dicke 1-20 % von der der Einheitszelle ist.

5. Batteriesatz nach einem der vorstehenden Ansprüche, bei dem die Niete (8), die isolierende elastische Komponente (9) und der plattenförmige Elektrodenanschluss durch Spritzgießen integriert werden.

6. Batteriesatz nach Anspruch 5, bei dem der plattenförmige Elektrodenanschluss ein Durchgangsloch (14) bei dem Teil aufweist, der durch die isolierende elastische Komponente (9) geklammert ist.

## Revendications

1. Bloc de batteries, comprenant une pluralité de cellules unitaires (1) dont chacune a deux bornes d'électrode (2 et 3), et qui sont connectées en série ou en parallèle en connectant une borne d'électrode (2 ou 3) d'une cellule unitaire (1) à une borne d'électrode (3 ou 2) d'une cellule unitaire adjacente (1), où
chacune des bornes d'électrode (2 et 3) a une forme de feuille, les bornes d'électrode (2 et 3) sont pliées de manière à former deux faces opposées, et la connexion entre les bornes d'électrode (2 et 3) est la liaison des deux faces opposées ;
**caractérisé en ce que** la cellule unitaire est une cellule prismatique ayant un boîtier (4) et un ensemble d'électrodes logé dans le boîtier, où le boîtier au niveau d'une extrémité comporte une plaque de couverture (7) ayant un trou traversant, la borne d'électrode en forme de feuille fait saillie vers l'extérieur à travers le trou traversant, et l'espace entre la plaque de couverture (7) et la borne d'électrode en forme de feuille est scellé par un élément d'étanchéité,
dans lequel l'élément d'étanchéité comprend un composant élastique isolant (9) serré au niveau du côté extérieur de la borne d'électrode en forme de feuille, et un rivet (8) maintenu sur le composant élastique isolant (9).

2. Bloc de batteries tel que revendiqué dans la revendication 1, dans lequel les bornes d'électrode en forme de feuille connectées les unes aux autres ont des extrémités qui sont pliées les unes vers les autres et liées entre elles.

3. Bloc de batteries tel que revendiqué dans la revendication 2, dans lequel les extrémités des bornes d'électrode en forme de feuille liées entre elles sont fixées par soudage et/ou collage et/ou une pince.

4. Bloc de batteries tel que revendiqué dans l'une quelconque des revendications 1 à 3, dans lequel la largeur de la borne d'électrode en forme de feuille étant de 5 à 40% de celle de la cellule unitaire, et l'épaisseur étant de 1 à 20% de celle de la cellule unitaire.

5. Bloc de batteries tel que revendiqué dans l'une des revendications précédentes, dans lequel le rivet (8), le composant élastique isolant (9) et la borne d'électrode en forme de feuille sont intégrés par moulage par injection.

6. Bloc de batteries tel que revendiqué dans la revendication 5, dans lequel la borne d'électrode en forme de feuille a un trou traversant (14) au niveau de la partie serrée par le composant élastique isolant (9).
